# EUROPÄISCHE PATENTSCHRIFT

(11) **EP 0 684 418 B1**
(45) Veröffentlichungstag und Bekanntmachung des Hinweises auf die Patenterteilung: **05.07.2000**
(21) Anmeldenummer: 95106163.9
(22) Anmeldetag: 25.04.1995
(51) Int. Cl.: F16K 31/06

(54) **Elektromagnetventil**
Solenoid valve
Clapet électromagnétique

(30) Priorität: 29.04.1994 DE 4415096
(43) Veröffentlichungstag der Anmeldung: 29.11.1995
(73) Patentinhaber: Kendrion Binder Magnete GmbH, 78048 Villingen-Schwenningen (DE)
(72) Erfinder: Blaffert, Wolfgang, Dipl.-Ing., D-78628 Rottweil (DE); Oesterle, Hans-Peter, Dipl.-Ing., D-78609 Tuningen (DE); Schäfer, Heinz, Dipl.-Ing., D-78048 VS-Villingen (DE); Bürk, Wolfgang, Dipl.-Ing., D-78054 VS-Schwenningen (DE)
(74) Vertreter: Patentanwälte Westphal, Mussgnug & Partner

(56) Entgegenhaltungen:
- CH-A- 500 414
- DE-A- 2 349 089
- DE-A- 4 033 946
- FR-A- 2 312 705
- GB-A- 865 634
- US-A- 3 543 797

## Beschreibung

Die Erfindung betrifft ein Magnetventil gemäß den Merkmalen des Oberbegriffs des Anspruchs 1.Ein solches Magnetventil ist aus CH-A-500414 bekannt.

Ein ähnliches Magnetventil ist z.B. aus G 91 07 436.3 und G 93 17 864.6 der Anmelderin bekannt. Dieses Magnetventil weist ein zylindrisches Gehäuse auf, in welchem eine Erregerspule auf einen Spulenkörper gewickelt und in einer axialen Durchgangsöffnung des Spulenkörpers ein bei Bestromung der Erregerspule entlang einer Mittenachse verschiebbarer Ankerkolben angeordnet ist. Bei axialer Verschiebung des Ankerkolbens wird ein stirnseitig am Ankerkolben angeordnetes Dichtelement in einen Ventilsitz eines Ventilteiles gedrückt oder freigegeben. Das zentrisch zur Mittenachse des Ankerkolbens angeordnete Dichtelement ist mit dem Ankerkolben über einen Stößel feststehend in Verbindung und somit vom Ankerkolben zwangsgeführt. Das Dichtelement wird durch die Kraft einer Druckfeder auf den Ventilsitz gepreßt. Wird die Erregerspule von Strom durch flossen, bildet sich eine Kraft entgegen der Federkraft aus, wodurch das Dichtelement den Ventilsitz freigibt. Das Magnetventil öffnet und ein gasförmiges oder flüssiges Medium kann durch das Magnetventil fließen. Der Vorteil solcher Magnetventile liegt darin, daß aufgrund eines geringen Ventilhubes innerhalb des Magnetventils eine schnelle Schaltfolge möglich ist. Derartige Magnetventile werden in großem Umfang beispielsweise in der Automobiltechnik zur pneumatischen Druck- bzw. Unterdrucksteuerung (z.B. Abgasrückführung, Getriebeschaltpunkt, Anhebung etc.) eingesetzt.

Besondere Bedeutung haben hierbei sogenannte Proportionalitäts-Magnetventile, bei denen abhängig von deren magnetischer Erregung der Erregerspule der Querschnitt einer Drosselbohrung verengt werden kann. Solche Proportionalitäts-Magnetventile bieten den Vorteil einer analogen Ansteuerbarkeit, d.h. daß abhängig von dem der Erregerspule zugeführten Strom der Druck des Druckmittels proportional einstellbar ist.

Das in WO 87/00963 beschriebene Proportionalitäts-Magnetventil weist einen innerhalb eines Magnetkernes axial angeordneten Betätigungsstift auf, an dessen Stirnseite ein Ventilkegel zum Abdichten eines Ventilsitzes an einer Drosselstelle des Magnetventils vorgesehen ist. An seinem dem Ventilkegel abgewandten Ende ist der Betätigungsstift feststehend mit einer sogenannten Rückschlußplatte in Verbindung. Die Rückschlußplatte ist durch das Magnetfeld der Erregerspule betätigbar und stellt somit das verstellbare Teil der Betätigungseinrichtung dar, während der Magnetkern das feststehende Teil bildet. Auf der Seite der Rückschlußplatte ist in dem Gehäuse des Magnetventils eine Rückstellfeder in Form einer Scheibenfeder an ihrem Außenumfang in axialer Richtung festgelegt. An ihrer radial inneren Einspannstelle ist die Rückstellfeder durch eine zwischen der Rückschlußplatte und der Rückstellfeder angeordnete Tellerfeder in Anlage an einem an der Rückschlußplatte angebrachten Bund gehalten.

Um bei diesem bekannten Proportionalitäts-Magnetventil eine weitgehende Unabhängigkeit von unterschiedlichen hydraulischen Kräften und damit unterschiedlichen Pumpendrücken zu erreichen, ist dem Proportionalitäts-Magnetventil eine Federkraft überlagert. Die bei Bestromung der Erregerspule auftretende Magnetkraft muß folglich gegen die am Ventilsitz auftretende hydraulische Kraft des Druckmittels sowie gegen die Federkraft arbeiten, welche gegenüber der am Ventilsitz auftretenden hydraulischen Kraft sehr groß ist. Zur Betätigung des bekannten Magnetventils ist somit sowohl eine große Magnetkraft als auch eine große Hubarbeit erforderlich. Da sich zudem das zentral angeordnete zwangsgeführte Dichtelement an der Spitze des Betätigungsstiftes bzw. Stößels nie exakt konzentrisch im Ventilsitz befindet, treten zwangsweise am Dichtelement teilweise große Reibungskräfte auf. Diese Reibungskräfte haben eine Vergrößerung der hydraulischen Hysterese des Magnetventils zur Folge.

Der Erfindung liegt daher die Aufgabe zugrunde, ein Magnetventil anzugeben, das die erwähnten Nachteile nicht aufweist und einen kompakten Aufbau aufweist sowie in einfacher Weise herzustellen ist.

Diese Aufgabe wird durch ein Magnetventil mit den Merkmalen des Anspruchs 1 gelöst.

Weiterbildungen der Erfindung sind Gegenstand der Unteransprüche.

Die Erfindung beruht im wesentlichen darauf, eine Druckmittelzuführung in den Innenraum des Gehäuses vorzusehen, um mit dem durch die Druckmittelzuführung in den Innenraum geführten Druckmittel den Ankerkolben in Richtung Dichtelement zu drücken. Hierzu ist das Dichtelement und der Ventilsitz exzentrisch zur Mittenachse des Ankerkolbens angeordnet. Das erfindungsgemäße Magnetventil erlaubt unabhängig vom hydraulisch anstehenden Pumpendruck bei gleicher Bestromung der Erregerspule in etwa den gleichen prozentualen Steuerdruck. Dies bedeutet, daß das Magnetventil bei maximaler Bestromung der Erregerspule trotz unterschiedlich großer Kräfte am Ventilsitz, die durch unterschiedlich hohe Pumpendrücke hervorgerufen werden, stets gerade sperrt.

Durch die in den Innenraum des Gehäuses erfindungsgemäß führende Druckmittelzuführung kann das Druckmittel dazu ausgenutzt werden, auf den Ankerkolben in Richtung Dichtelement Druck auszuüben. Da das Druckmittel zugleich auf das Dichtelement im Ventilsitz in entgegengesetzter Richtung Druck ausübt, kann bei entsprechender Dimensionierung des Magnetventils ein Druckausgleich am Dichtelement erreicht werden. Damit ist die auf das Dichtelement einwirkende resultierende hydraulische Kraft unabhängig vom Pumpendruck und stets gleich groß. Durch einen derartigen Druckausgleich sind zur Betätigung des Magnetventils lediglich noch geringe Mgnetkräfte und eine kleine Hubarbeit erforderlich.

Erfindungsgemäß ist weiterhin vorgesehen, den Ankerkolben entlang der Mittenachse mit einer Durchgangsöffnung zu versehen, wobei die Durchgangsöffnung an ihrem in Richtung Dichtelement weisenden unteren Ende einen geringeren Durchmesser als an dem dem Dichtelement abgewandten oberen Ende aufweist. Die unterschiedlichen Durchmesser der Durchgangsöffnung können beispielsweise durch eine abgestufte Durchgangsöffnung realisiert werden. Innerhalb dieser Durchgangsöffnung ist ein Bolzen feststehend zum Gehäuse des Magnetventils angeordnet, wobei das obere Ende und das untere Ende dieses Bolzens abdichtend in der Durchgangsöffnung des Ankerkolbens sitzt. Zwischen dem Bolzen und Ankerkolben befindet sich ein Ausgleichsraum, welcher über eine Bohrung im Bolzen mit Druckmittel befüllbar ist. Innerhalb dieses Ausgleichsraumes übt das zugeführte Druckmittel in Richtung Dichtelement Druck auf den Ankerkolben aus, da der Bolzen feststehend innerhalb des Gehäuses des Magnetventils angeordnet ist.

Da zusätzlich bei einer erfindungsgemäßen Weiterbildung des Magnetventils Ankerkolben und Dichtelement nicht zwangsgeführt, sondern lose zueinander gekoppelt sind, können die bei zwangsgeführten kegeligen Dichtelementen auftretenden großen Reibungskräfte am Dichtelement vermieden werden. Die hydraulische Hysterese wird damit vorteilhafterweise nicht vergrößert. Druckausgleich am Dichtelement sowie ein loses, ausgekoppeltes Dichtelement, z.B. eine Kugel, werden dabei durch einen exzentrisch zur Mittenachse des Ankerkolbens angeordneten Ventilsitz realisiert.

Der Bolzen kann beispielsweise einen abgestuften Außendurchmesser aufweisen, wobei der Durchmesser des Bolzens an der dem Dichtelement zugewandten Seite geringer ist als an der dem Dichtelement abgewandten Seite. Zweckmäßigerweise ist der Außendurchmesser des Bolzens an den Innendurchmesser der Durchgangsöffnung des Ankerkolbens bis auf den Bereich des erwähnten Ausgleichsraumes entsprechend angepaßt. Der Bolzen weist in seinem Bereich geringeren Durchmessers eine axial zum Bolzen verlaufende Sackbohrung auf, welche an ihrem Ende innerhalb des Gehäuses des Magnetventils mit mindestens einer radialen Durchgangsbohrung in Verbindung steht.

Durch diese Sackbohrung mit sich anschließender radialer Durchgangsbohrung kann das Druckmittel in den Ausgleichsraum in einfacher Weise geführt werden.

Um einen möglichst guten Druckausgleich am Dichtelement zu erlangen, ist die Differenzfläche, d.h. die Fläche, auf die das in den Innenraum des Magnetventils geführte Druckmittel in Richtung Dichtelement Druck ausüben kann, mindestens annähernd gleich der Fläche des Ventilsitzes, in der das Dichtelement bei geschlossenem Magnetventil sitzt. Ist der Ankerkolben hohlzylinderförmig mit zwei unterschiedlichen Innendurchmessern ausgebildet, so ist die erwähnte Differenzfläche durch die Differenz der beiden kreisförmigen Querschnitte des Ankerkolbens festgelegt.

Eine Weiterbildung der Erfindung sieht vor, daß der Ventilsitz für das Dichtelement orthogonal zur Mittenachse des Ankerkolbens angeordnet ist und am Ende einer parallel zur Mittenachse liegenden Bohrung innerhalb des Ventilteiles sitzt. Hierdurch wird erreicht, daß bei Zuführung ein und desselben Druckmittels in Richtung Ventilsitz einerseits und andererseits in den Innenraum des Magnetventils bei entsprechender Dimensionierung der Differenzfläche und der Fläche des Ventilsitzes exakt gleiche Kräfte am Dichtelement angreifen und damit ein optimaler Druckausgleich sichergestellt ist. Eine am Ankerkolben durch Bestromung der Erregerspule hervorgerufene Magnetkraft muß somit nur eine verhältnismäßig geringe Federkraft überwinden.

In einer Ausführungsform der Erfindung sind an beiden Stirnseiten des Ankerkolbens jeweils Federeinrichtungen angeordnet, an welchen sich der Ankerkolben abstützt. Durch die beiderseitig am Ankerkolben angeordneten Federeinrichtungen wird garantiert, daß die Federkraft in Hubanfangstellung, d.h. bei keiner Bestromung, Null ist. Ferner ist durch die Federeinrichtungen bei kleinster Ankerbewegung ein präziser Federkraftanstieg sichergestellt.

Im einfachsten Fall kann das Dichtelement des erfindungsgemäßen Magnetventils als Kugel ausgebildet sein.

Weitere Vorteile und Ausführungsformen der Erfindung werden nachfolgend im Zusammenhang mit Figuren näher erläutert. Es zeigen :
- Figur 1: eine Schnittansicht eines erfindungsgemäßen Magnetventils mit Ventilsitz und Ausgleichskammer,
- Figur 2: eine Detaildarstellung des Magnetventils im Bereich der Ausgleichskammer und
- Figur 3: eine Detaildarstellung des Magnetventils im Bereich des Ventilsitzes.

In den folgenden Figuren bezeichnen gleiche Bezugszeichen, sofern nicht anders angegeben, gleiche Teile.

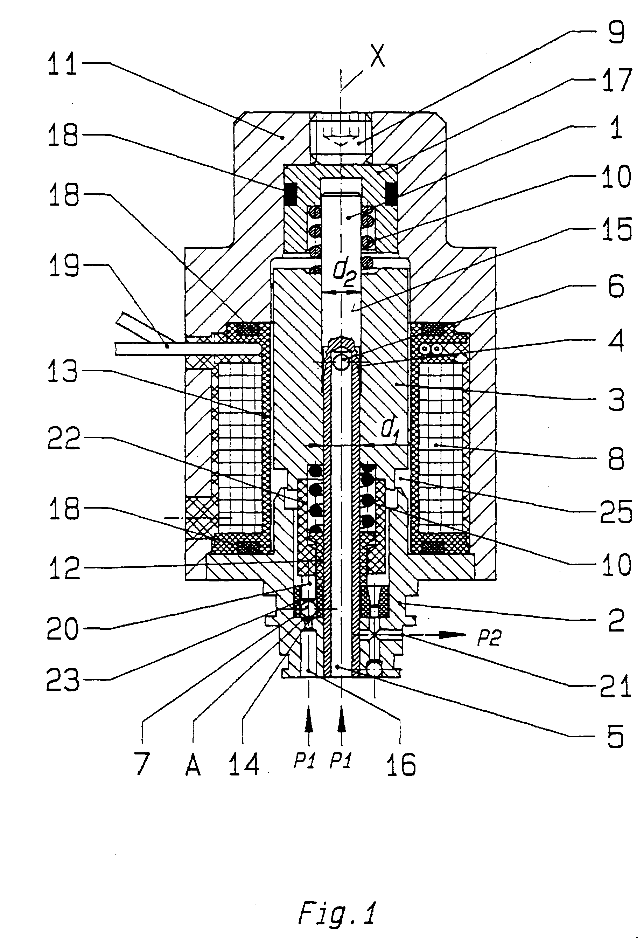

In Figur 1 ist ein Ausführungsbeispiel eines erfindungsgemäßen Magnetventils dargestellt, welches unabhängig von einem hydraulisch anstehenden Zulaufdruck P1 eines Druckmittels P bei gleich großer Bestromung einer Erregerspule 8 in etwa den gleichen prozentualen Steuerdruck P1 bzw. P2 erzeugt. Ein solches Magnetventil wird auch als Proportionalitäts-Magnetventil bezeichnet. Dies bedeutet, daß das Magnetventil bei voller Bestromung trotz unterschiedlich großer Kräfte am Ventilsitz, die durch unterschiedliche Zulaufdrücke P1 hervorgerufen werden, gerade sperrt.

Das in Figur 1 dargestellte Magnetventil weist ein zylindrisches Gehäuse 11 auf, in welchem die Erregerspule 8 auf einen Spulenkörper 13 gewickelt ist. Das Gehäuse 11 des Magnetventils schließt an seinem in Figur 1 gezeigten unteren Ende mit einem noch näher zu erläuternden Ventilteil 2 ab. In einer axialen Durchgangsöffnung des Spulenkörpers 13 ist ein hohlzylinderförmiger Ankerkolben 3 entlang seiner Mittenachse X verschiebbar angeordnet. Hierfür sitzt in einer Durchgangsöffnung 15 des Ankerkolbens 3 ein Bolzen 1, der sich über die beiden unteren und oberen Enden der Durchgangsöffnung 15 des Ankerkolbens 3 hinaus erstreckt. Der Bolzen 1 dient dem Ankerkolben 3 als Führung. Der Bolzen 1 ist feststehend mit dem Ventilteil 2 in Verbindung. Der Bolzen 1 kann hierfür beispielsweise in das Ventilteil 2 eingepreßt sein. Der Ankerkolben 3 und der Bolzen 1 sind so zueinander angepaßt, daß sich der Ankerkolben 3 axial entlang der Mittenachse X auf dem Bolzen 1 gut bewegen läßt und der Übergang von Ankerkolben 3 und Bolzen 1 abgedichtet ist.

Bei Bestromung der Erregerspule 8 mit über Zuleitungen 19 geführtem Strom wird eine Magnetkraft auf den Ankerkolben 3 ausgeübt, so daß sich dieser in Richtung Ventilteil 2 bewegt. Innerhalb des Ventilteiles 2 ist ein Dichtelement 7, hier eine Kugel, zum Abdichten eines Ventilsitzes 14 am Ende einer zur Zuführung von Druckmittel P dienenden Bohrung 16 vorgesehen. Über dem Dichtelement 7 befinden sich Koppelelemente 20, 22, die eine Wirkverbindung zwischen der in Figur 1 gezeigten unteren Stirnseite des Ankerkolbens 3 und dem Dichtelement 7 ermöglichen. Im Ausführungsbeispiel von Figur 1 werden diese Koppelelemente 20, 22 durch einen über dem Dichtelement 7 liegenden Bolzen 20 und einer zwischen dem Bolzen 20 und der unteren Stirnseite des Ankerkolbens 3 befindlichen hohlzylinderförmigen Buchse 22 gebildet. Das Dichtelement 7 und der in Richtung Dichtelement 7 weisende Teil des Bolzens 20 sind in einer Führung 23 derart angeordnet, daß das Dichtelement 7 sicher in dieser Führung 23 liegt.

Erfindungsgemäß ist der Ventilsitz 14 samt Dichtelement 7 exzentrisch zur Mittenachse X des Ankerkolbens 3 angeordnet. Damit liegen auch die Bohrung 16 und der Bolzen 20 exzentrisch zur Mittenachse X. Im Ausführungsbeispiel der Figur 1 verläuft die Bohrung 16 parallel zur Mittenachse X und der Ventilsitz 14 liegt orthogonal zu dieser Bohrung 16 und damit orthogonal zur Mittenachse X.

Koaxial zu der hohlzylinderförmigen Buchse 22 an der Unterseite des Ankerkolbens 3 ist eine Buchse 12 angeordnet. Der Ankerkolben 3 stützt sich an seiner oberen und unteren Stirnseite jeweils über eine Federeinrichtung 10 ab. Die Federeinrichtung 10 ist im Ausführungsbeispiel der Figur 1 als schraubenförmige Druckfeder ausgebildet, die die aus dem Ankerkolben 3 herausragenden Enden des Bolzens 1 teilweise umgibt. Die an der unteren Stirnseite des Ankerkolbens 3 vorgesehene Federeinrichtung 10 stützt sich einerseits an der erwähnten Buchse 12 und andererseits an der unteren Stirnseite des Ankerkolbens 3 ab. Die gegenüberliegende Federeinrichtung 10 stützt sich an der oberen Stirnseite des Ankerkolbens 3 einerseits und andererseits an einer Verstelleinrichtung 9, 17 ab, über die die Hublage des Ankerkolbens 3 einstellbar ist. Die Verstelleinrichtung 9, 17 weist beispielsweise eine topfförmige Hülse 17 auf, welche mit einem innenliegenden ringförmigen Bund versehen ist. Der Bolzen 1 ragt mit seinem oberen Ende in die Öffnung dieser topfförmigen Hülse 17. Am ringförmigen Bund dieser Hülse 17 stützt sich die Federeinrichtung 10 ab. Über der Hülse 17 ist eine Stellschraube 9 angeordnet, durch welche die Hülse 17 axial verschiebbar und damit die Hublage des Ankerkolbens 3 sowie die Hublage des Ventilsitzes 14 einstellbar ist.

Das Magnetventil weist darüber hinaus drei Dichtungen 18 auf, um einen dichten Druckraum 25 innerhalb des Gehäuses 11 des Magnetventils bereitzustellen. So sind an den beiden Stirnseiten des Spulenkörpers 13 jeweils Dichtungen 18 in Form von 0-Ringen angeordnet. Die Dichtung 18 an der unteren Stirnseite des Spulenkörpers 13 sorgt für eine Abdichtung zwischen Spulenkörper 13 und Ventilteil 2, welches deckelartig über einen Flansch mit dem Gehäuse 11 des Magnetventils in Verbindung steht. Die an der oberen Stirnseite des Spulenkörpers 13 angeordnete Dichtung 18 in Form eines O-Ringes sorgt für ein sicheres Abdichten zwischen Gehäuse 11 und Spulenkörper 13. Zusätzlich ist eine Dichtung 18 in Form eines 0-Ringes koaxial zur Mittenachse X in einer Nut an der Außenwandung der Hülse 17 der Verstelleinrichtung angeordnet. Der Druckraum 25 des Magnetventils in Figur 1 ist durch die Zwischenräume zwischen den einzelnen Elementen Ventilteil 2, Spulenkörper 13, Hülse 17, Ankerkolben 3 und Bolzen 1 sowie Buchse 22 und Bolzen 20 bestimmt. Bei geöffnetem Magnetventil, d.h. das Dichtelement 7 liegt nicht abdichtend im Ventilsitz 14, gelangt Druckmittel P in den Druckraum 25. Ausgangsseitig ist dieser Druckraum 25 mit einem Ablauf 21 versehen. Je nach dem, wie weit der Ventilsitz 14 vom Dichtelement 7 freigegeben wird, ist der Steuerdruck P1 bzw. P2 am Eingang 16 bzw. am Ausgang 21 des Magnetventils einstellbar. Der hierfür notwendige Hub des Dichtelementes 7 ist durch die Bestromung der Erregerspule 8 und damit der axialen Verschiebung des Ankerkolbens 3 in Richtung Dichtelement 7 einstellbar. Durch die Stellschraube 9 ist der Hub des Dichtelementes 7 und damit der Steuerdruck P1 bzw. P2 am Eingang bzw. Ausgang des Magnetventils ohne Öffnung des Druckraumes 25 genau justierbar.

Erfindungsgemäß ist das Dichtelement 7 nicht vom Ankerkolben 3 zwangsgeführt, sondern steht mit dem Ankerkolben 3 lose in Verbindung. Hierfür wird zweckmäßigerweise das Dichtelement 7, d.h. die Kugel, in der Führung 23 lose angeordnet, während die zylinderförmige Buchse 22 samt Bolzen 20 feststehend zueinander angeordnet sein können. Bei axialer Bewegung des Ankerkolbens 3 in Richtung Bohrung 16 wird somit über die Hülse 22 und den Bolzen 20 Druck auf das Dichtelement 7 ausgeübt und der Ventilsitz 14 in durch die Höhe des über die Zuleitungen 19 der Erregerspule 8 zugeführten Stromes bestimmten Maße abgedichtet.

Um ein sicheres Sperren des Ventilsitzes 14 durch das Dichtelement 7 zu gewährleisten, muß der Ankerkolben 3 mindestens so viel Kraft auf das Dichtelement 7 ausüben, daß das Dichtelement 7 gegen die Kraft des Druckmittels P in den Ventilsitz 14 gedrückt wird. Der bei nicht druckausgeglichenen Magnetventilen hierfür notwendige Strom mußte daher nachteiligerweise um so höher eingestellt werden, je höher der Druck P1 am Ventilsitz ist.

Erfindungsgemäß wird dieser Nachteil durch Vorsehen eines Druckausgleiches innerhalb des Magnetventils vermieden. Hierzu weist das erfindungsgemäße Magnetventil eine Druckmittelzuführung in den Innenraum des Gehäuses 11 auf, um durch das über diese Druckmittelzuführung in den Innenraum zugeführte Druckmittel den Ankerkolben 3 in Richtung Dichtelement 7 zu drücken.

Um dies zu erzielen, ist zwischen dem Bolzen 1 und dem Ankerkolben 3 ein Ausgleichsraum 4 angeordnet. Zur Bildung dieses Ausgleichsraumes 4 weist der Ankerkolben 3 eine abgestufte Durchgangsöffnung 15 entlang der Mittenachse X auf, wobei die Durchgangsöffnung 15 an der der Hülse 17 zugewandten oberen Seite des Ankerkolbens 3 einen größeren Durchmesser d2 aufweist als der Durchmesser dl an der dem Dichtelement 7 zugewandten Seite des Ankerkolbens 3 ist. Der Bolzen 1, der hydraulisch abdichtend in dieser Durchgangsöffnung 15 des Ankerkolbens 3 sitzt, hat zwei unterschiedliche Außendurchmesser, die den erwähnten Durchmessern d2 und in etwa dl entsprechen. An seinem oberen Teil ist der Bolzen 1 in etwa mit dem Außendurchmesesr d2 und an seinem unteren Teil in etwa mit dem Außendurchmesser dl versehen. Der Bolzen 1 und der Ankerkolben 3 sind so zueinander abgestimmt, daß der bereits erwähnte Ausgleichsraum 4 zwischen Ankerkolben 3 und Bolzen 1 entsteht, der mit Druckmittel befüllbar ist. Zur Befüllung dieses Ausgleichsraumes 4 mit Druckmittel P ist der Bolzen 1 in seinem Bereich geringeren Durchmessers dl mit einer Sackbohrung 5 versehen, die im Bereich des Ausgleichsraumes 4 in eine Querbohrung 6 mündet. Durch die Sackbohrung 5 mit sich anschließender Querbohrung 6 ist der Ausgleichsraum 4 mit Druckmittel P befüllbar.

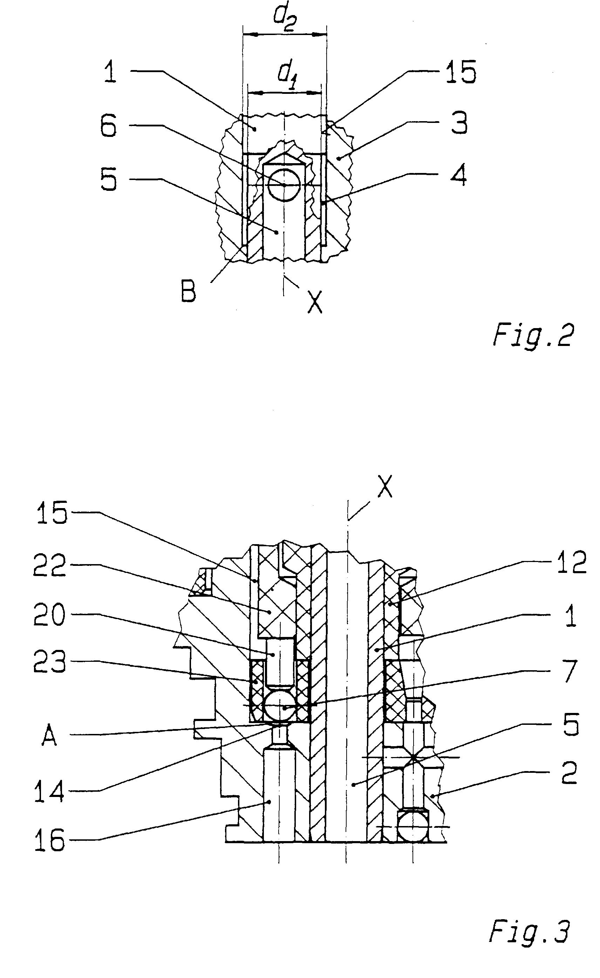

Zur Verdeutlichung ist in Figur 2 eine vergrößerte Darstellung des erfindungsgemäßen Magnetventils im Bereich des Ausgleichsraumes 4 gezeigt. Gleiche Bezugszeichen stehen wieder für gleiche Teile. Es ist deutlich die abgestufte Durchgangsöffnung 15 des Ankerkolbens 3 ersichtlich. In den Bereich des Ankerkolbens 3 mit dem größeren Durchmesser d2 ragt der Teil des Bolzens 1 mit geringerem Durchmesser dl, so daß in den Zwischenraum von Ankerkolben 3 und Bolzen 1 über die Sackbohrung 5 und sich anschließende Querbohrung 6 das Druckmittel füllbar ist. Dieser Zwischenraum ist der erwähnte Ausgleichsraum 4.

Wird über die Sackbohrung 5 das Druckmittel P mit einem vorgegebenen Druck P1 zugeführt, so wirkt eine Kraft nur auf die in Figur 2 mit B bezeichnete Differenzfläche, da der Bolzen 1 feststehend mit dem Gehäuse 11 des Magnetventils verbunden ist. Diese auf die Differenzfläche B wirkende Kraft versucht den Ankerkolben 3 in Richtung Dichtelement 7 zu schieben. Wird die Differenzfläche B, das ist in Figur 2 die zwischen Ankerkolben 3 und Bolzen 1 befindliche untere ringförmige Stirnfläche, so groß wie die Fläche des Ventilsitzes 14 gewählt, werden die auf das Dichtelement 7 einwirkenden hydraulischen Kräfte neutralisiert oder zumindest annähernd neutralisiert. Die durch Bestromung der Erregerspule 8 auf den Ankerkolben 3 wirkende Magnetkraft muß somit erfindungsgemäß nur eine geringe Kraft überwinden, um das Dichtelement 7 in den Ventilsitz 14 zu drücken.

Obwohl in Figur 2 der Bolzen 1 mit abgestuftem Außendurchmesser dl, d2 und der Ankerkolben 3 mit abgestufter Durchgangsöffnung 15 dargestellt wurde, ist die Erfindung nicht auf eine derartige Ausbildung beschränkt. Vielmehr kann der Ausgleichsraum 4 innerhalb des Magnetventils auf beliebige Art und Weise realisiert werden. Wesentlich ist lediglich, daß zur Erzielung eines Druckausgleiches die in Richtung Dichtelement 7 wirkende hydraulische Kraft auf den Ankerkolben 3 mindestens annähernd gleich groß ist wie die am Ventilsitz 14 in Richtung Dichtelement 7 wirkende und damit entgegengesetzte Kraft.

In Figur 3 ist der Deutlichkeit halber das erfindungsgemäße Magnetventil im Bereich des Ventilsitzes 14 ausschnittsweise vergrößert dargestellt. Gleiche Bezugszeichen stehen wieder für gleiche Teile. Es ist deutlich das am Ende der Bohrung 16 im Ventilsitz 14 sitzende Dichtelement 7 erkennbar, das über den Bolzen 20 und die hohlzylinderförmige Buchse 22 vom Ankerkolben 3 mit Druck beaufschlagbar ist. Die Fläche des Ventilsitzes 14 ist mit A bezeichnet.

Wird erfindungsgemäß die Sackbohrung 5 des Bolzens 1 und die Bohrung 16, an deren Ende das Dichtelement 7 sitzt, mit dem gleichen Druck P1 beaufschlagt, so wirkt auf die Fläche A des Ventilsitzes 14 und auf die in Figur 2 erwähnte Differenzfläche B in der Ausgleichskammer 4 die gleiche Kraft, wodurch der erwünschte Druckausgleich erreicht wird. Durch die lose Kopplung zwischen Ankerkolben 3 und Dichtelement 7 wird erreicht, daß das Dichtelement 7 stets konzentrisch im Ventilsitz 14 sitzten kann. Hierdurch werden am Dichtelement auftretende Reibungskräfte so gering wie möglich gehalten.

## Patentansprüche

1. Magnetventil mit einem zylindrischen Gehäuse (11), in welchem eine Erregerspule (8) auf einen Spulenkörper (13) gewickelt und in einer axialen Durchgangsöffnung des Spulenkörpers (13) ein bei Bestromung der Erregerspule (8) entlang einer Mittenachse (X) verschiebbarer Ankerkolben (3), durch den ein an einer Stirnseite des Ankerkolbens (3) angeordnetes Dichtelement (7) in einen eine Fläche (A) aufweisenden Ventilsitz (14) eines Ventilteiles (2) drückbar ist, angeordnet ist, wobei eine Druckmittelzuführung (5, 6) in einen Innenraum des Gehäuses (11) vorgesehen ist, um das Druckmittel (P) auf eine Fläche (B) des Ankerkolbens (3) zu leiten und den Ankerkolben (3) in Richtung Dichtelement (7) zu drücken,
**dadurch gekennzeichnet,**
daß das Dichtelement (7) und der Ventilsitz (14) exzentrisch zur Mittenachse des Ankerkolbens (3) angeordnet sind, und dass der Ankerkolben (3) entlang der Mittenachse (X) mit einer Durchgangsöffnung (15) versehen ist, dass die Durchgangsöffnung (15) an ihrem in Richtung Dichtelement (7) zeigenden unteren Ende einen geringeren Durchmesser (dl) als an dem dem Dichtelement (7) abgewandten oberen Ende aufweist, dass innerhalb dieser Durchgangsöffnung (15) ein im Ventilteil (2) feststehender Bolzen (1) mit seinem oberen Ende und unteren Ende in der Durchgangsöffnung (15) abdichtend angeordnet ist, und dass zwischen Bolzen (1) und Ankerkolben (3) ein Ausgleichsraum (4) angeordnet und der Ausgleichsraum (4) über eine Bohrung (5, 6) innerhalb des Bolzens (1) mit Druckmittel (P) befüllbar ist.

2. Magnetventil nach Anspruch 1, dadurch gekennzeichnet, daß der Bolzen (1) einen abgestuften Außendurchmesser aufweist, wobei der Durchmesser (dl) des Bolzens (1) an der dem Dichtelement (7) zugewandten Seite geringer als an der dem Dichtelement (7) abgewandten Seite ist, und daß der Bolzen (1) in seinem Bereich geringeren Durchmessers (dl) mit einer axial zum Bolzen (1) verlaufenden Sackbohrung (5) versehen ist, welche an ihrem Ende innerhalb des Gehäuses mit mindestens einer radialen Durchgangsbohrung (6) in Verbindung steht.

3. Magnetventil nach Anspruch 1 oder 2, dadurch gekennzeichnet, daß der Ankerkolben (3) eine abgestufte Durchgangsöffnung (15) aufweist, wobei die Differenzfläche (B) der beiden unterschiedlich großen Durchgangsöffnungen (15) mindestens annähernd der Fläche (A) des Ventilsitzes (14) entspricht.

4. Magnetventil nach einem der Ansprüche 1 bis 3, dadurch gekennzeichnet, daß der Ventilsitz (14) orthogonal zur Mittenachse (X) des Ankerkolbens (3) angeordnet ist und am Ende einer parallel zur Mittenachse (X) liegenden Bohrung (16) innerhalb des Ventilteiles (2) sitzt.

5. Magnetventil nach einem der Ansprüche 1 bis 4, dadurch gekennzeichnet, daß sich der Ankerkolben (3) an seinen beiden Stirnseiten an jeweils einer Federeinrichtung (10) abstützt.

6. Magnetventil nach Anspruch 5, dadurch gekennzeichnet, daß die Hublage des Ankerkolbens (3) im druckmittelbeaufschlagten Zustand über die Vorspannung der Federeinrichtung (10) über axial zur Federeinrichtung (10) angeordnete Verstellmittel (9, 17) einstellbar ist.

7. Magnetventil nach einem der Ansprüche 1 bis 6, dadurch gekennzeichnet, daß das Dichtelement (7) und der Ankerkolben (3) lose zueinander angeordnet sind.

8. Magnetventil nach einem der Ansprüche 1 bis 7, dadurch gekennzeichnet, daß zwischen Ankerkolben (3) und Dichtelement (7) mindestens ein Koppelelement (20, 22) angeordnet ist.

9. Magnetventil nach einem der Ansprüche 1 bis 8, dadurch gekennzeichnet, daß das Dichtelement (7) eine Kugel ist.

10. Magnetventil nach einem der Ansprüche 1 bis 9, dadurch gekennzeichnet, daß der Bolzen (1) feststehend mit dem Ventilteil (2) verbunden und der Ankerkolben (3) axial auf dem Bolzen (1) beweglich ist.

## Claims

1. A solenoid valve having a cylindrical housing (11), in which an exciting coil (8) is wound onto a coil body (13) and in an axial through-opening of the coil body (13) is disposed an armature plunger (3) that is displaceable along a centre axis (X) upon the energisation of the exciting coil (8), by which armature plunger a sealing element (7) disposed on one end side of the armature plunger (3) can be forced into a valve seat (14), having an area (A), of a valve part (2), wherein a pressure fluid supply (5, 6) into an interior space of the housing (11) is provided to convey the pressure fluid (P) to an area (B) of the armature plunger (3) and to force the armature plunger (3) towards the sealing element (7),
**characterised in that** the sealing element (7) and the valve seat (14) are disposed eccentrically to the centre axis of the armature plunger (3),
**and in that** the armature plunger (3) is provided with a through-opening (15) along the centre axis (X),
**in that** at its lower end pointing towards the sealing element (7) the through-opening (15) has a smaller diameter (dl) than at the upper end faced away from the sealing element (7),
**in that** inside this through-opening (15) a shaft (1) fixed in the valve part (2) is tightly disposed with its upper and lower end of the through opening (15),
**and in that** an equalisation chamber (4) is disposed between shaft (1) and armature plunger (3) and the equalisation chamber (4) can be filled with pressure fluid (P) via a bore (5, 6) inside the shaft (1).

2. A solenoid valve according to Claim 1,
**characterised in that** the shaft (1) has a graduated external diameter, the diameter (dl) of the shaft (1) at the side faced towards the sealing element (7) being less than at the side faced away from the sealing element (7),
**and in that** in its region of the smaller diameter (dl) the shaft (1) is provided with a blind hole (5) extending axially to the shaft (1), which at its end inside the housing communicates with at least one radial through-bore (6).

3. A solenoid valve according to Claim 1 or 2,
**characterised in that** the armature plunger (3) comprises a graduated through-opening (15), the differential area (B) of the two through-openings (15) of different sizes corresponding at least approximately to the area (A) of the valve seat (14).

4. A solenoid valve according to one of Claims 1 to 3,
**characterised in that** the valve seat (14) is disposed orthogonally to the centre axis (X) of the armature plunger (3) and at the end of a bore (16) lying parallel to the centre axis (X) is seated inside the valve part (2).

5. A solenoid valve according to one of Claims 1 to 4,
**characterised in that** the armature plunger (3) is supported by each of its two end sides on a spring mechanism (10).

6. A solenoid valve occurring to Claim 5,
**characterised in that** the stroke length of the armature plunger (3) is adjustable in the state when pressure medium is supplied via the biasing of the spring mechanism (10) via adjustment means (9, 17) disposed axially to the spring mechanism (10).

7. A solenoid valve according to one of Claims 1 to 6,
**characterised in that** the sealing element (7) and the armature plunger (3) are disposed in loose relationship to one another.

8. A solenoid valve according to one of Claims 1 to 7,
**characterised in that** at least one coupling element (20, 22) is disposed between armature plunger (3) and sealing element (7).

9. A solenoid valve according to one of Claims 1 to 9,
**characterised in that** the sealing element (7) is a ball.

10. A solenoid valve according to one of Claims 1 to 9,
**characterised in that** the shaft (1) is fixedly connected to the valve part (2) and the armature plunger (3) is axially movable on the shaft (1).

## Revendications

1. Soupape magnétique avec un boîtier cylindrique (11), dans lequel une bobine d'excitation (8) est enroulée sur un corps de bobine (13) qui est percé d'une ouverture axiale de passage, dans laquelle peut coulisser le long d'un axe médian (X) un piston d'induit (3), quand la bobine d'excitation (8) est alimentée, avec sur une face frontale du piston d'induit (3) un élément d'étanchéité (7) que le piston peut appliquer sur la portée (A) du siège (14) d'une partie de soupape (2), tandis qu'on prévoit, à l'intérieur du boîtier (1), une amenée (5, 6) d'un fluide sous pression, pour conduire ce fluide (P) sur une portée (B) du piston d'induit (3) et pousser ce piston vers l'élément d'étanchéité,
caractérisée en ce que
- l'élément d'étanchéité (7) et le siège de soupape (14) sont excentrés par rapport à l'axe (X) du piston d'induit (3) percé, selon cet axe, d'un passage (15) qui, à son extrémité inférieure située vers l'élément d'étanchéité (7), présente un diamètre (dl) inférieur à celui de son extrémité supérieure éloignée de l'élément d'étanchéité,
- à l'intérieur du passage (15), une tige (1) solidaire de la partie de soupape (2) obture de manière étanche le passage (15) avec son extrémité supérieure et son extrémité inférieure,
- entre la tige (1) et le piston d'induit (3) se trouve une chambre d'équilibrage (4) qui peut être remplie de fluide sous pression (P) à travers des perçages (5, 6) à l'intérieur de la tige (1).

2. Soupape magnétique selon la revendication 1,
caractérisée en ce que
la tige (1) a un diamètre externe étagé, le diamètre (dl) de la tige, du côté de l'élément d'étanchéité (7) étant supérieure au diamètre du côté opposé, et la tige (1), dans sa partie à plus petit diamètre (dl), présente un alésage borgne (5) coaxial qui, à son extrémité située à l'intérieur du boîtier, est relié à au moins un perçage radial de passage (6).

3. Soupape magnétique selon la revendication 1 ou 2,
caractérisée en ce que
le piston d'induit (3) présente un passage (15) étagé et la portée différentielle (B) qui forme les deux parties du passage (15) de grandeurs différentes correspond au moins à la portée (A) du siège de soupape (14).

4. Soupape magnétique selon l'une des revendications 1 à 3,
caractérisée en ce que
le siège de soupape (14) est perpendiculaire à l'axe (X) du piston d'induit (3) et se trouve à l'extrémité d'un perçage (16) parallèle à l'axe (X), dans la partie de soupape (2).

5. Soupape magnétique selon une des revendications 1 à 4,
caractérisée en ce que
le piston d'induit (3), à chacune de ses deux extrémités, est en appui sur un dispositif de ressort (10).

6. Soupape magnétique selon la revendication 5,
caractérisée en ce que
la position de course du piston d'induit (3) quand il est soumis à l'action du fluide sous pression peut être réglée par la précontrainte du dispositif de ressort (10), en utilisant un moyen de réglage (9, 17) monté axialement par rapport à ce dispositif.

7. Soupape magnétique selon les revendications 1 à 6,
caractérisée en ce que
l'élément d'étanchéité (7) et le piston d'induit (3) sont librement mobiles l'un par rapport à l'autre.

8. Soupape magnétique selon l'une des revendications 1 à 7,
caractérisée en ce qu'
au moins un élément d'accouplement (20, 22) est monté entre le piston d'induit (3) et l'élément d'étanchéité (7).

9. Soupape magnétique selon l'une des revendications 1 à 8,
caractérisée en ce que
l'élément d'étanchéité (7) est une bille.

10. Soupape magnétique selon l'une des revendications 1 à 9,
caractérisée en ce que
la tige (1) est reliée fixement à la partie de soupape (2) et le piston d'induit (3) peut coulisser axialement sur la tige (1).
